# FASCICULE DE BREVET EUROPEEN

(11) **EP 1 998 256 B1**
(45) Date de publication et mention de la délivrance du brevet: **09.11.2011**
(21) Numéro de dépôt: 08103933.1
(22) Date de dépôt: 13.05.2008
(51) Int. Cl.: G06F 13/40, H05K 7/14

(54) **Dispositif de contrôle de communication entre un module et un bus de transmission**
Vorrichtung zur Steuerung der Kommunikation zwischen einem Modul und einem Datenübertragungsbus.
Device for controlling communication between a module and a transmission bus.

(30) Priorité: 29.05.2007 FR 0755297
(43) Date de publication de la demande: 03.12.2008
(73) Titulaire: Schneider Electric Industries SAS, 92500 Rueil-Malmaison (FR)
(72) Inventeur: Adragna, Jean-Jacques, 06160 Antibes (FR); Meurlay, Alain, 06200 Nice (FR); Rugo, Serge, 06550 La Roquette sur Siagne (FR)
(74) Mandataire: Dufresne, Thierry

(56) Documents cités:
- EP-A- 1 041 491
- US-A- 5 568 610
- US-A- 6 105 091
- US-B1- 6 237 057
- US-B1- 6 532 558

## Description

La présente invention se rapporte à un dispositif de contrôle de communication entre un module et un bus de transmission. L'invention trouve une application particulièrement avantageuse dans le domaine des automates programmables.

Un automate programmable ou PLC («Programmable Logical Controller») est un équipement d'automatisme capable de piloter, commander et/ou surveiller un ou plusieurs process, notamment dans le domaine des automatismes industriels, du bâtiment ou de la distribution électrique.

De construction généralement modulaire, un automate programmable PLC est composé de différents modules qui communiquent entre eux par un bus de transmission, appelé généralement bus «fond de panier» (ou appelé aussi bus «backplane»). Les modules sont fixés mécaniquement dans un rack, lequel comprend un circuit imprimé qui supporte également le bus fond de panier ainsi que les éléments de connexion destinés à coopérer avec des connecteurs présents généralement sur la partie arrière des modules de manière à réaliser la liaison nécessaire entre les modules et le bus. Le nombre de modules dépend bien entendu de la taille et du type de process à automatiser.

Typiquement, un automate programmable peut comporter :
- un module d'alimentation fournissant les différentes tensions aux autres modules à travers le bus fond de panier.
- un module unité centrale UC qui comporte un logiciel embarqué («firmware») intégrant un système d'exploitation OS temps réel, et un programme d'application, ou programme utilisateur, contenant les instructions à exécuter par le logiciel embarqué pour effectuer les opérations d'automatisme souhaitées. Le module UC comporte aussi généralement une connexion en face avant vers des outils de programmation de type ordinateur personnel PC.
- des modules d'entrées/sorties E/S de divers types en fonction du process à commander, tels que E/S numériques ou TOR, analogiques, de comptage, etc. Ces modules E/S sont reliés à des capteurs et des actionneurs participant à la gestion automatisée du process.
- un ou plusieurs modules de communication vers des réseaux de communication (Ethernet, CAN, ...) ou des interfaces homme-machine (écran, clavier,...).

A titre d'exemple, un module d'entrées/sorties peut comporter entre 1 à 32 voies E/S, un automate PLC pouvant être capable suivant les modèles de gérer plusieurs centaines de voies E/S. En cas de besoin, plusieurs racks sont donc connectés entre eux dans un même PLC.

Ainsi, en fonction de l'application et du process à automatiser, un automate PLC peut comporter un grand nombre de modules. En fonctionnement normal, si un des modules devient hors service, on veut pouvoir le remplacer sans interférer avec les autres modules du PLC. Il faut donc pouvoir extraire le module défaillant alors qu'il est sous tension, puis insérer un module de remplacement, sans perturber le reste de la configuration de l'automate et le déroulement du programme. C'est ce qu'on appelle la fonction de remplacement à chaud ou «hot swap».

La même situation se présente lorsque le client utilisateur décide, en fonction de son application ou de son process, de retirer un module d'un emplacement d'un rack et/ou d'en ajouter un dans un emplacement vide.

Pour résoudre les difficultés liées à l'interchangeabilité des modules à chaud, une première solution a été proposée consistant à réaliser, en fonction des signaux appliqués, un séquencement dans le temps de la connexion électrique entre l'élément de connexion de fond de panier et le connecteur présent sur le module, de manière par exemple à assurer l'ordre de connexion suivant lors de l'insertion d'un module : masse, tension positive d'alimentation, signaux utiles, etc. A cet effet, la solution proposée connue prévoit de donner des longueurs différentes, conformément à l'ordre de connexion souhaitée, aux différentes broches de l'élément de connexion de fond de panier ou du connecteur du module.

L'avantage de cette solution est d'être sûr du séquencement des signaux à l'insertion et à l'extraction du module du fond de panier. Par exemple, le signal de masse reste toujours connecté plus longtemps que la tension positive d'alimentation, donc la broche correspondante sera plus longue.

Par contre, ce système connu présente plusieurs inconvénients, notamment l'usure mécanique et surtout son coût puisqu'il utilise des connecteurs spécifiques non standards. De plus, il faut prévoir une importante longueur des broches de façon à créer des écarts de longueur suffisants pour obtenir des intervalles de temps nécessaires aux séquences d'insertion/extraction. Ces longueurs importantes pour les broches des connecteurs peuvent s'avérer incompatibles avec l'encombrement total de l'automate programmable.

Une deuxième solution existante consiste à insérer le connecteur du module dans l'élément de connexion de fond de panier par rotation autour d'un axe, ce qui permet d'obtenir que les broches proches de l'axe de rotation soient connectées avant celles qui en sont les plus éloignées, lors de l'insertion d'un module suivant un mouvement de rotation autour de l'axe.

L'avantage de ce système est identique à celui qui a été précédemment décrit. Son principal inconvénient est d'imposer des spécifications supplémentaires à des connecteurs non prévus initialement pour cette fonction. De plus, le tolérancement est difficile à réaliser pour des produits de petites dimensions car les connecteurs vont comporter des broches se trouvant très proches les unes des autres, et il peut donc être difficile d'avoir un comportement reproductible en toute circonstance.

On connait de US 6,237,057 une méthode et un dispositif pour connecter sélectivement des cartes d'extension à un bus pour périphériques (PCI). Le dispositif comporte un arbitre de bus capable de gérer dynamiquement la connexion et la déconnexion à chaud des cartes d'extension, permettant ainsi l'augmentation du nombre de carte d'extension dans le système.

On connait de US 6, 532, 558 une méthode et un dispositif pour tester les circuits de connexion à chaud d'un bus de fond de panier actif. Le bus comporte un connecteur additionnel qui permet au technicien de placer une carte de test servant à simuler la charge d'un composant sur le bus. Pendant la procédure de test la carte d'extension présente dans l'emplacement à tester est isolée du bus.

Aussi, un but de l'invention est de proposer un dispositif qui permettrait l'insertion à chaud d'un module sur le bus de transmission, sans perturber le fonctionnement des autres modules déjà présents ni perturber les signaux de communication circulant sur le bus, et tout en évitant les contraintes mécaniques liées à la réalisation des broches et connecteurs comme dans les systèmes connus décrits plus haut.

Ce but est atteint, conformément à l'invention, grâce à un dispositif de contrôle de communication entre un module et un bus de transmission, caractérisé en ce que le dispositif comporte :
- une unité de contrôle de communication disposée entre un élément de connexion du module au bus de transmission et le bus de transmission, ladite unité comprenant une entrée de commande et étant apte à mettre en communication l'élément de connexion avec le bus de transmission par application d'un signal de validation à l'entrée de commande,
- dans le module, des moyens pour générer le signal de validation.

Ainsi, le dispositif conforme à l'invention garantit que, lors de l'insertion du module dans l'élément de connexion de fond de panier, la communication avec le bus de transmission sera établie par l'unité de contrôle de communication si, et seulement si, celle-ci a reçu sur l'entrée de commande un signal de validation indiquant que le module est prêt à communiquer dans des conditions optimales avec le bus de communication fond de panier. Le démarrage du module inséré est donc complètement déterministe.

On comprend de la définition qui vient d'être donnée de l'invention que celle-ci n'est pas limitée au seul domaine des automates programmables et qu'elle s'étend à tout système modulaire basé sur un bus de transmission du type «fond de panier».

En levant les contraintes mécaniques des systèmes connus, l'invention permet d'utiliser des connecteurs standards avec l'avantage en terme de coût que cela représente. De plus, l'insertion sous tension est garantie même sur des produits de faibles dimensions pour lesquels l'exigence de bas coût la rendait impossible à réaliser par un dimensionnement et un tolérancement mécaniques traditionnels.

Contrairement aux systèmes mécaniques précédents susceptibles de produire une communication intermittente et incertaine lorsque le module est mal inséré dans l'élément de connexion, le dispositif de l'invention interdit toute communication tant que le signal de validation n'est pas reçu sur l'entrée de commande.

Selon une caractéristique, lesdits moyens pour générer le signal de validation comprennent un composant logique qui reçoit en entrée au moins un signal d'entrée caractéristique d'un état du module et qui délivre une sortie, ladite sortie générant le signal de validation lorsque ledit signal d'entrée est représentatif d'un état de fonctionnement du module compatible avec la mise en communication du module avec le bus de transmission.

Comme on le verra en détail plus loin, le signal d'entrée peut être généré à partir de la présence des tensions du module ainsi que diverses informations sur l'état et/ou le bon fonctionnement du module.

L'invention prévoit également la possibilité, lors de l'extraction sous tension du module, de garantir un retrait sûr du module alors que ce dernier peut être encore alimenté du fait que les broches d'alimentation sont toujours connectées ou que le module comporte une propre source d'énergie auxiliaire (batterie ou condensateur).

Dans ce but, selon l'invention, ladite unité de contrôle de communication est apte à empêcher la communication entre ledit élément de connexion et le bus de transmission par application d'un signal de passivation à l'entrée de commande de l'unité de contrôle de communication.

Avantageusement, lorsque le signal de passivation est appliqué à l'entrée de commande, cela crée une haute impédance entre les entrées et les sorties de l'unité de contrôle de communication, c'est-à-dire entre les signaux du bus de transmission présents sur le circuit fond de panier et les signaux du bus de transmission présents sur l'élément de connexion du module correspondant. De cette manière, le bus fond de panier n'est pas affecté par d'éventuels signaux parasites durant l'extraction du module et lorsque le module est absent.

Le signal de passivation peut être produit selon deux modes de génération différents.

Selon un premier mode, la sortie du composant logique génère le signal de passivation lorsque l'un de ses signaux d'entrée est représentatif d'un état de fonctionnement du module incompatible avec la mise en communication du module avec le bus de transmission. Ce mode de génération correspond à un module qui n'est pas encore prêt à communiquer ou qu'il ne l'est plus suite à un défaut apparu lors du fonctionnement du module. Le signal de passivation est produit dans ce cas par le module lui-même.

Selon un deuxième mode, le signal de passivation est généré, lorsque le module est déconnecté de l'élément de connexion, par un module de passivation disposé entre l'élément de connexion et l'entrée de commande. Ce mode de génération correspond à la situation où l'élément de connexion de fond de panier n'est pas ou plus connecté à un module. Le signal de passivation est alors produit par le module de passivation du circuit fond de panier.

De façon pratique, l'invention prévoit que l'unité de contrôle de communication est choisie parmi les moyens suivants : portes logiques trois états, relais électromécaniques, relais statiques.

L'invention décrit également un équipement d'automatisme comprenant un bus de transmission et une pluralité de modules susceptibles de se connecter au bus de transmission et comportant au moins un tel dispositif de contrôle de communication.

Selon l'invention, l'équipement d'automatisme peut également comporter un système mécanique d'insertion et d'extraction du module par rotation autour d'un axe. Ce système permet notamment de séquencer l'ordre de disparition de signaux au moment du mouvement de rotation effectué durant l'extraction du module. Par exemple, le point commun (0V) de l'alimentation électrique du module peut être appliqué en un point de l'élément de connexion situé à proximité dudit axe de rotation, et ladite entrée de commande est reliée à un point de l'élément de connexion situé à proximité d'une extrémité de l'élément de connexion opposée audit axe de rotation.

Cette utilisation combine le dispositif conforme à l'invention et le système d'insertion/extraction par rotation décrit plus haut. Cette combinaison est en effet réalisable même avec de faibles dimensions de l'équipement d'automatisme, car le dispositif de l'invention a permis de réduire le nombre de broches contraintes et il est alors plus facile de les espacer, pour obtenir un écart suffisant.

La description qui va suivre en regard du dessin annexé, donné à titre d'exemple non limitatif, fera bien comprendre en quoi consiste l'invention et comment elle peut être réalisée.

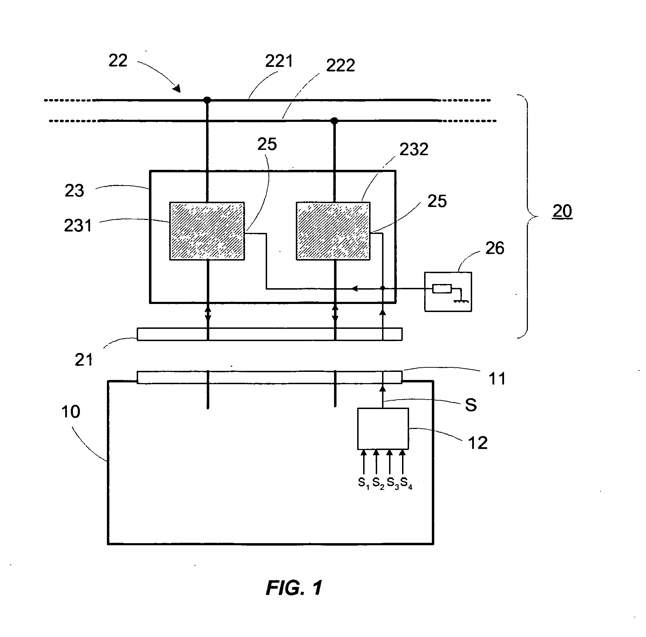

La figure 1 est un schéma d'un dispositif de contrôle de communication conforme à l'invention.

Sur la figure 1 est représenté un schéma partiel d'un équipement d'automatisme modulaire du type automate programmable, comprenant une partie fixe 20, tel qu'un circuit imprimé appelé circuit fond de panier 20, auquel un module 10, tel qu'un module E/S, peut être connecté ou déconnecté à volonté.

Le circuit fond de panier 20 supporte un bus de transmission 22 desservant l'ensemble des modules de l'équipement d'automatisme. Le bus de transmission 22 de la figure 1 est par exemple un bus série multipoints comprenant principalement deux lignes de transmission bidirectionnelle 221, 222, à savoir une ligne 221 de circulation des signaux d'horloge («DEL») du bus et une ligne 222 de transmission des données («DATA»).

Le circuit fond de panier 20 comporte également une pluralité d'éléments de connexion 21, de type broches ou connecteurs fond de panier, chacun étant destiné à recevoir un connecteur 11 adapté correspondant d'un module 10 lorsque celui-ci est inséré dans le rack de l'équipement d'automatisme. Une fois inséré, la liaison électrique entre l'élément de connexion 21 et le connecteur 11 du module 10 permet notamment au module 10 d'être électriquement alimenté et d'être susceptible de communiquer avec d'autres modules de l'équipement d'automatisme au travers du bus de transmission 22. Dans la figure 1, le module 10 n'est pas complètement inséré, car son connecteur 11 est disjoint de l'élément de connexion 21 du circuit fond de panier 20.

La figure 1 montre également un dispositif permettant de contrôler la communication entre le module 10 et le bus 22, c'est-à-dire de pouvoir, dans des circonstances qui seront expliquées plus loin, soit autoriser la communication, soit au contraire l'empêcher et isoler le module 10 du bus 22, même lorsque le module 10 est raccordé électriquement à l'élément de connexion 21 du circuit fond de panier 20.

Comme on peut le voir sur la figure 1, ce dispositif de contrôle de communication comprend une unité de contrôle de communication 23 qui joue le rôle de barrière logique de communication et qui est composée de deux ensembles 231, 232 de communication bidirectionnelle disposés sur le circuit fond de panier 20, entre l'élément de connexion 21 et respectivement les lignes 221, 222 de transmission du bus 22.

Chaque ensemble 231, 232 comprend par exemple deux portes logiques à trois états (appelé aussi buffer tri-state) de communication unidirectionnelle, disposées tête-bêche l'une par rapport à l'autre afin de permettre une communication bidirectionnelle entre le module 10 et les lignes 221, 222 du bus 22.

Les ensembles 231, 232 de communication bidirectionnelle pourraient également être réalisés par des relais qui seraient fermés en présence d'un signal de validation, ou ouverts, donc isolés, en présence d'un signal de passivation, à la place des portes logiques. Dans ce cas, un relais par ligne de transmission suffit. De même, on pourrait aussi utiliser des relais statiques réalisés avec des transistors MOSFET car ils fournissent une très bonne isolation en position ouverte (résistance supérieure à 1 MΩ) et sont très conducteurs en position fermée.

Les ensembles de communication bidirectionnelle 231, 232 comportent une entrée de commande 25 dont le fonctionnement est le suivant :
- Si le signal appliqué à cette entrée de commande 25 est un signal de validation de valeur logique 1, alors les informations traversent les ensembles 231, 232 et le module 10 est mis en communication avec le bus 22 de façon bidirectionnelle.
- Inversement, si le signal appliqué à l'entrée de commande 25 est un signal de passivation de valeur logique 0, c'est-à-dire inverse du signal de validation, alors les sorties des ensembles 231, 232 sont dans un état haute impédance, ce qui isole le bus 22 de l'extérieur et la communication entre le module 10 et le bus 22 est empêchée.

D'autre part, la figure 1 montre également que le module 10 comporte un composant électronique logique 12 apte à générer une sortie S destinée à être appliqué aux entrées de commande 25 en tant que signal de validation ou signal de passivation.

La sortie S est générée par le composant logique 12 à partir d'un ou plusieurs signaux d'entrée S₁, S₂, S₃, S₄, ... représentatifs d'un état de fonctionnement du module 10. Le principe est que si le composant logique 12 établit que les valeurs de ce ou ces signaux d'entrée sont compatibles avec une mise en communication satisfaisante du module 10 avec le bus 22, la sortie S fournit un signal de validation de valeur 1 afin d'activer les ensembles 231, 232. A l'inverse, si le module 10 n'est pas prêt à communiquer du fait qu'au moins un des signaux d'entrée S₁, S₂, S₃, S₄, ... indique que le module 10 n'est pas dans un état compatible pour une communication satisfaisante avec le bus 22, la sortie S du composant logique 12 fournit un signal de passivation de valeur 0, ce qui inhibe les ensembles 231, 232.

Dans le cadre de réalisations très simples, un seul signal d'entrée S₁ du composant logique 12 peut être envisagé, notamment en étant relié à la tension positive (par exemple +5V) du module via une résistance. Dans ce cas, le signal de validation de valeur 1 indique seulement que le module 10 est bien alimenté.

En pratique, il est cependant préférable que la sortie S du composant logique 12 résulte d'une combinaison d'un ensemble de conditions logiques établies sur une pluralité de signaux S₁, S₂, S₃, S₄, ... caractéristiques de différents états ou fonctionnements du module 10, comme par exemple : la présence d'alimentation(s) du module, l'absence de défaut sur le module, la confirmation d'une bonne exécution d'une séquence de test ou d'initialisation du module, etc... Ceci permet de s'assurer que le module 10 est non seulement correctement alimenté mais également en état de fonctionner correctement avant qu'il ne soit mis en communication avec le bus 22.

On peut aussi envisager une séquence logique de démarrage à exécuter avant de délivrer le signal de validation : détection d'un seuil de tension suffisante dans le module, puis étape d'attente pour s'assurer de la complétude d'insertion des signaux et la précharge de condensateurs, puis exécution d'une séquence d'amorçage à l'intérieur du module, etc.

Indifféremment, le composant logique 12 peut être intégré à un microprocesseur du module 10 ou peut constituer un composant particulier.

Il faut également signaler que certains signaux du bus de transmission 22, autres que les lignes 221 et 222, peuvent éviter la barrière logique représentée par l'unité de contrôle de communication 23 et être directement connectés entre le bus 22 et le module 10.

On peut également voir sur la figure 1 la présence sur le circuit fond de panier 20 d'un module de passivation 26 destiné à générer un signal de passivation par rappel à la masse à travers une résistance de faible valeur lorsque le module 10 n'est pas connecté au fond de panier, et donc lorsque la sortie S n'est pas reliée à l'unité 23. Ainsi, quand le module 10 n'est pas inséré dans le rack, on assure avantageusement en permanence une bonne isolation entre les signaux du bus 22 sur le circuit fond de panier 20 et l'élément de connexion 21.

Il est évident que, suivant le type et les caractéristiques des ensembles de communication bidirectionnelle 231, 232 utilisés, les valeurs des signaux logiques de validation et de passivation appliqués à l'entrée de commande 25 pourraient indifféremment être inversées, à savoir 0 pour le signal de validation et 1 pour le signal de passivation. Dans ce cas, la génération de la sortie S serait modifiée en conséquence et la résistance du module 26 serait rappelée à la tension positive du circuit 20.

## Revendications

1. Dispositif de contrôle de communication entre un module (10) et un bus de transmission (22), comportant une unité de contrôle de communication (23) disposée entre le bus de transmission (22) et un élément de connexion (21) destiné à connecter le module (10) au bus de transmission (22), ladite unité (23) comprenant une entrée de commande (25) et étant apte à mettre en communication l'élément de connexion (21) avec le bus (22) par application d'un signal de validation à l'entrée de commande (25), **caractérisé en ce que** ledit dispositif comporte des moyens (12) présents dans le module (10) pour générer ledit signal de validation, lesdits moyens comprenant un composant logique (12) qui reçoit en entrée au moins un signal d'entrée (S₁, S₂, S₃, S₄) caractéristique d'un état du module (10) et qui délivre une sortie (S), ladite sortie (S) générant ledit signal de validation lorsque le signal d'entrée (S₁, S₂, S₃, S₄) est représentatif d'un état de fonctionnement du module compatible avec la mise en communication du module (10) avec le bus de transmission (22).

2. Dispositif selon la revendication 1, **caractérisé en ce que** l'unité de contrôle de communication (23) est apte à empêcher la communication entre l'élément de connexion (21) et le bus de transmission (22) par application d'un signal de passivation à l'entrée de commande (25).

3. Dispositif selon la revendication 2, **caractérisé en ce qu'**il comprend un module de passivation (26) qui est disposé entre l'élément de connexion (21) et l'entrée de commande (25), et qui génère ledit signal de passivation lorsque le module (10) n'est pas connecté à l'élément de connexion (21).

4. Dispositif selon la revendication 2, **caractérisé en ce que** l'unité de contrôle de communication (23) présente une haute impédance d'entrée pour le bus de transmission (22) lorsque ledit signal de passivation est appliqué à l'entrée de commande (25).

5. Dispositif selon l'une des revendications 1 à 4, **caractérisé en ce que** l'unité de contrôle de communication (23) est choisie parmi les moyens suivants : portes logiques à trois états, relais électromécaniques, relais statiques.

6. Equipement d'automatisme comprenant un bus de transmission (22) et une pluralité de modules (10) susceptibles de se connecter au bus de transmission (22), **caractérisé en ce qu'**il comporte au moins un dispositif de contrôle de communication selon l'une des revendications précédentes.

7. Equipement d'automatisme selon la revendication 6, comportant un système mécanique d'insertion et d'extraction du module (10) par rotation autour d'un axe, **caractérisé en ce que** ladite entrée de commande (25) est reliée à un point de l'élément de connexion (21) situé à proximité d'une extrémité de l'élément de connexion opposée audit axe de rotation.

## Claims

1. Device for controlling communication between a module (10) and a transmission bus (22), comprising a communication control unit (23) disposed between the transmission bus (22) and a connection element (21) intended to connect the module (10) to the transmission bus (22), said unit (23) comprising a control input (25) and being able to place the connection element (21) in communication with the bus (22) by applying a validation signal to the control input (25), **characterized in that** said device comprises means (12) in the module (10) for generating said validation signal, said means comprising a logic component (12) which receives as input at least one input signal (S₁, S₂, S₃, S₄) representative of a state of the module (10) and which delivers an output (S), said output (S) generating said validation signal when the input signal (S₁, S₂, S₃, S₄) is representative of an operating state of the module compatible with the placing of the module (10) in communication with the transmission bus (22).

2. Device according to Claim 1, **characterized in that** the communication control unit (23) is able to prevent communication between the connection element (21) and the transmission bus (22) by applying a passivation signal to the control input (25).

3. Device according to Claim 2, **characterized in that** it comprises a passivation module (26) which is disposed between the connection element (21) and the control input (25), and which generates said passivation signal when the module (10) is not connected to the connection element (21).

4. Device according to Claim 2, **characterized in that** the communication control unit (23) exhibits a high input impedance for the transmission bus (22) when said passivation signal is applied to the control input (25).

5. Device according to one of Claims 1 to 4, **characterized in that** the communication control unit (23) is chosen from among the following means: logic gates with three states, electromechanical relays, static relays.

6. Automatic control facility comprising a transmission bus (22) and a plurality of modules (10) capable of connecting to the transmission bus (22), **characterized in that** it comprises at least one communication control device according to one of the preceding claims.

7. Automatic control facility according to Claim 6, comprising a mechanical system for inserting and extracting the module (10) by rotation about an axis, **characterized in that** said control input (25) is linked to a point of the connection element (21) situated in proximity to an opposite end of the connection element from said rotation axis

## Patentansprüche

1. Vorrichtung zur Steuerung der Kommunikation zwischen einem Modul (10) und einem Übertragungsbus (22), die eine Kommunikationssteuereinheit (23) aufweist, die zwischen dem Übertragungsbus (22) und einem Verbindungselement (21) angeordnet ist, das dazu bestimmt ist, das Modul (10) mit dem Übertragungsbus (22) zu verbinden, wobei die Einheit (23) einen Steuereingang (25) enthält und das Verbindungselement (21) durch Anlegen eines Validierungssignals an den Steuereingang (25) mit dem Bus (22) in Verbindung setzen kann, **dadurch gekennzeichnet, dass** die Vorrichtung im Modul (10) vorhandene Einrichtungen (12) aufweist, um das Validierungssignal zu erzeugen, wobei die Einrichtungen ein logisches Bauteil (12) enthalten, das am Eingang mindestens ein Eingangssignal (S₁, S₂, S₃, S₄) empfängt, das für einen Zustand des Moduls (10) repräsentativ ist, und das ein Ausgangssignal (S) liefert, wobei das Ausgangssignal (S) das Validierungssignal erzeugt, wenn das Eingangssignal (S₁, S₂, S₃, S₄) für einen Betriebszustand des Moduls repräsentativ ist, der mit dem Inverbindungsetzen des Moduls (10) mit dem Übertragungsbus (22) kompatibel ist.

2. Vorrichtung nach Anspruch 1, **dadurch gekennzeichnet, dass** die Kommunikationssteuereinheit (23) die Kommunikation zwischen dem Verbindungselement (21) und dem Übertragungsbus (22) durch Anlegen eines Passivierungssignals an den Steuereingang (25) verhindern kann.

3. Vorrichtung nach Anspruch 2, **dadurch gekennzeichnet, dass** sie ein Passivierungsmodul (26) enthält, das zwischen dem Verbindungselement (21) und dem Steuereingang (25) angeordnet ist und das Passivierungssignal erzeugt, wenn das Modul (10) nicht mit dem Verbindungselement (21) verbunden ist.

4. Vorrichtung nach Anspruch 2, **dadurch gekennzeichnet, dass** die Kommunikationssteuereinheit (23) eine hohe Eingangsimpedanz für den Übertragungsbus (22) aufweist, wenn das Passivierungssignal an den Steuereingang (25) angelegt wird.

5. Vorrichtung nach einem der Ansprüche 1 bis 4, **dadurch gekennzeichnet, dass** die Kommunikationssteuereinheit (23) aus den folgenden Einrichtungen ausgewählt wird: Logikglieder mit drei Zuständen, elektromechanische Relais, statische Relais.

6. Automatisierungsausrüstung, die einen Übertragungsbus (22) und eine Vielzahl von Modulen (10) enthält, die mit dem Übertragungsbus (22) verbunden werden können, **dadurch gekennzeichnet, dass** sie mindestens eine Kommunikationssteuervorrichtung nach einem der vorhergehenden Ansprüche aufweist.

7. Automatisierungsausrüstung nach Anspruch 6, die ein mechanisches System zum Einführen und Entnehmen des Moduls (10) durch Drehen um eine Achse aufweist, **dadurch gekennzeichnet, dass** der Steuereingang (25) mit einem Punkt des Verbindungselements (21) verbunden ist, der sich in der Nähe eines Endes des Verbindungselements entgegengesetzt zur Drehachse befindet.
